# EUROPEAN PATENT APPLICATION

(11) **EP 1 548 584 A2**
(43) Date of publication of application: **29.06.2005**
(21) Application number: 04027674.3
(22) Date of filing: 22.11.2004
(51) Int. Cl.: G06F 9/445

(54) **Application data management method for mobile terminal and mobile terminal used therein**

(30) Priority: 25.11.2003 JP 2003394313
(71) Applicant: NEC CORPORATION, Tokyo (JP)
(72) Inventor: Kamiya, Masaki, Tokyo (JP)
(74) Representative: Betten & Resch

(57) **Abstract**

An application data area of a data storage unit includes amanagement information area for storingmanagement information on a downloaded application, an application area storing a downloaded application itself, and a user data area for storing user data for the application. When deletion of an application with user data being held is requested through the input unit, an application processing circuit deletes only the application area in the application data area subjected to the deletion.

## Description

### BACKGROUND OF THE INVENTION

### 1. Field of the Invention

The present invention relates to an application data management method for a mobile terminal and a mobile terminal used therein. In particular, the invention relates to an application data management method for a mobile terminal, which allows management of an application such as a game downloaded via communications, and a mobile terminal used therein.

### 2. Description of the Related Art

Up to now, mobile terminals including cellular telephones, which have been released to the market, are provided with functions of downloading an application such as a game via communications, storing the application in a mobile terminal, and storing user data for the application, including a high score, in the mobile terminal.

However, use of the mobile terminal makes it difficult to secure a massive storage area. Without free areas in a storage area upon download of a new application, it is necessary to delete an application that has already been stored therein to create a free area in the storage area.

In view of this, for example, JP 2002-297483 A (hereinafter, referred to as "Document 1") discloses a technique for deleting a stored application to secure a free area in a storage area within a mobile terminal. According to the technique for deleting an application described in Document 1, the application to be deleted is selected between a downloaded application that is not accompanied by an application management information and a downloaded application that is accompanied by an application management information.

However, Document 1 includes no description on user data whether to be stored or deleted. This may lead to a problem in that deletion of an application lets the user data for the application be deleted simultaneously.

### SUMMARY OF THE INVENTION

The present invention has been made in view of the above problems, and has an object to provide: an application data management method for a mobile terminal, which allows user data to be held upon deletion of an application and, when the deleted application is redownloaded, leaves the user data available upon execution of the application in the same way as before the deletion; and a mobile terminal used therein.

In order to solve the above-mentioned problems, according to the present invention, there is provided an application data management method for a mobile terminal that performs management of an application, the mobile terminal including: an input unit for inputting data, an output unit for displaying data, and a communication circuit for obtaining an application via a network.

Further, the application data management method includes:
(1-1) storing application data including: management information including identification information of the application that is downloaded and an address from which the application is downloaded; an application itself of the downloaded application; and a user data corresponding to the application, so that the management information is stored in a management information area, the application itself is stored in an application area, and the user data is stored in a user data area;
(1-2) when a request to delete the application is made through the input unit, displaying on the output unit a first list screen that allows selection of the application to be deleted from a list of applications stored in the data storage unit;
(1-3) when the application to be deleted is selected on the displayed first list screen, displaying on the output unit a first confirmation screen that allows selection as to whether to hold the user data for the application; and
(1-4) when it is selected to hold the user data on the displayed first confirmation screen, deleting only the application area storing the application to be deleted.

Further, the above-mentioned application data management method for a mobile terminal may include, when it is selected not to hold the user data on the displayed first confirmation screen, deleting all areas for the application data corresponding to the application to be deleted.

Further, the above-mentioned application data management method for a mobile terminal may include, when only the application area storing the application to be deleted is deleted, adding a mark to the application to be deleted which is displayed in the list of applications on the output unit.

Further, the above-mentioned application data management method for a mobile terminal may include:
when a request to redownload the application is made through the input unit, displaying a second list screen of applications on the output unit;
when the application added with the mark is selected on the displayed second list screen of applications, redownloading the target application from a storage address of the application via the communication circuit based on the address of the application stored in the corresponding management information area; and
recovering the application into the original application data by securing the application area corresponding to the target application in the data storage unit to store the redownloaded application in the secured application area.

Further, the above-mentioned application data management method for a mobile terminal may include, when the application is redownloaded, erasing the mark for the application from the list of applications displayed on the output unit.

Further, the above-mentioned application data management method for a mobile terminal may include:
when a request to download the application is made through the input unit, downloading the application from a server via the communication circuit;
checking whether or not the same application as the downloaded application has already been stored in the data storage unit;
if it is judged that the same application is not stored, checking whether or not the data storage unit has an area that can store the application;
if it is judged that there exists the area that can store the application, creating an application data corresponding to the application newly downloaded; and
storing the created application data in the data storage unit.

Further, the above-mentioned application data management method for a mobile terminal may include:
checking whether or not the data storage unit has the application area that stores the same application as was downloaded before; and
if it is judged that there exists the application area, discarding the downloaded application.

Further, the above-mentioned application data management method for a mobile terminal may include:
if it is judged that the application area has been deleted, displaying on the output unit a second confirmation screen to check whether or not to use the stored user data;
when it is selected not to use the stored user data on the second confirmation screen, deleting the user data area for the downloaded application;
checking whether or not there exists a storage area for the application;
if it is judged that there exists the storage area, creating the application data corresponding to the application newly downloaded; and
storing the created application data in the data storage unit.

According to the present invention, there is also provided a mobile terminal for performing management of an application, including:
(2-1) an input unit for inputting data;
(2-2) an output unit for displaying data;
(2-3) a communication circuit for obtaining an application via a network;
(2-4) storing means for storing application data including: management information including identification information of the application that is downloaded and an address from which the application is downloaded; an application itself of the downloaded application; and a user data corresponding to the application, so that the management information is stored in a management information area, the application itself is stored in an application area, and the user data is stored in a user data area;
(2-5) first displaying means for, when a request to delete the application is made through the input unit, displaying on the output unit a first list screen that allows selection of the application to be deleted from a list of applications stored in the data storage unit;
(2-6) second displaying means for, when the application to be deleted is selected on the displayed first list screen, displaying on the output unit a first confirmation screen that allows selection as to whether to hold the user data for the application; and
(2-7) first deleting means for, when it is selected to hold the user data on the displayed first confirmation screen, deleting only the application area storing the application to be deleted.

Further, the above-mentioned mobile terminal may include second deleting means for, when it is selected not to hold the user data on the displayed first confirmation screen, deleting all areas for the application data corresponding to the application to be deleted.

Further, the above-mentioned mobile terminal may include third displaying means for, when only the application area storing the application to be deleted is deleted, adding a mark to the application to be deleted which is displayed in the list of applications on the output unit.

Further, the above-mentioned mobile terminal may include:
fourth displaying means for, when a request to redownload the application is made through the input unit, displaying a second list screen of applications on the output unit;
redownloading means for, when the application added with the mark is selected on the displayed second list screen of applications, redownloading the target application from a storage address of the application via the communication circuit based on the address of the application stored in the corresponding management information area; and
recovering means for recovering the application into the original application data by securing the application area corresponding to the target application in the data storage unit to store the redownloaded application itself in the secured application area.

Further, the above-mentioned mobile terminal may include erasing means for, when the application is redownloaded, erasing the mark for the application from the list of applications displayed on the output unit.

Further, the above-mentioned mobile terminal may include:
downloading means for, when a request to download the application is made through the input unit, downloading the application from a server via the communication circuit;
first checking means for checking whether or not the same application as the downloaded application has already been stored in the data storage unit;
second checking means for, if it is judged that the same application is not stored, checking whether or not the data storage unit has an area that can store the application;
first creating means for, if it is judged that there exists the area that can store the application, creating an application data area corresponding to the application newly downloaded; and
first storing means for storing the created application data in the data storage unit.

Further, the above-mentioned mobile terminal may include:
third checking means for checking whether or not the data storage unit has the application area that stores the same application as was downloaded before; and
discarding means for, if it is judged that there exists the application area, discarding the downloaded application.

Further, the above-mentioned mobile terminal may include:
fifth displaying means for, if it is judged that the application area has been deleted, displaying on the output unit a second confirmation screen to check whether or not to use the stored user data;
third deleting means for, when it is selected not to use the stored user data on the second confirmation screen, deleting the user data area for the downloaded application;
fourth checking means for checking whether or not there exists a storage area for the application;
second creating means for, if it is judged that there exists the storage area, creating the application data corresponding to the application newly downloaded; and
second storing means for storing the created application data in the data storage unit.

That is, according to the present invention, the mobile terminal allows the selection as to whether or not to hold the user data upon deletion of an application, and if it is selected that the user data is to be held, the user data is held and only the application is deleted. This produces an effect that when the application that was previously deleted is redownloaded through a browser or the like, the same user data as was used before is available upon execution of the application.

### BRIEF DESCRIPTION OF THE DRAWINGS

These and other aspects, features, and advantages of the invention will become more fully apparent from the following detailed description taken in conjunction with accompanying drawings. In the drawings:
FIG. 1 is a diagram showing an example of a structure of a mobile terminal according to an embodiment of the present invention;
FIG. 2 is a diagram showing an application processing circuit according to the embodiment of the present invention;
FIG. 3 is a flowchart showing how the application processing circuit operates upon deletion of an application;
FIG. 4 is a diagram showing an example of how display is performed upon deletion of an application;
FIG. 5 is a flowchart showing how the application processing circuit operates upon redownload of an application for which only an application area has been deleted;
FIG. 6 is a diagram showing an example of how display is performed upon redownload of an application; and
FIG. 7 is a flowchart showing how the application processing circuit operates upon download of an application.

### DETAILED DESCRIPTION OF THE PREFERRED EMBODIMENT

Detailed description will now be made of a best mode for carrying out the invention with reference to the drawings.

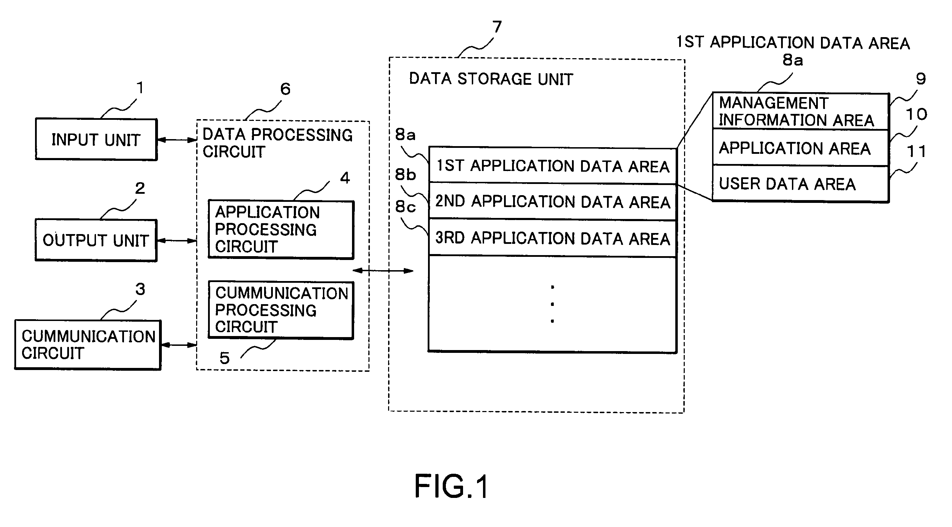

FIG. 1 is a block diagram showing an example of a structure of a mobile terminal according to an embodiment of the present invention.

Referring to FIG. 1, the mobile terminal of this embodiment includes an input unit 1, an output unit 2, a communication circuit 3 for performing communications such as obtaining application software, a data processing circuit 6, and a data storage unit 7. In the following description, the application software is referred to as an application.

The data processing circuit 6 operates under control of a program executed by a central processing unit (CPU; not shown). The data processing circuit 6 includes an application processing circuit 4 for controlling registration, display, execution, or the like of an application, and a communication processing circuit 5 for controlling communications such as download of an application.

The data storage unit 7 is a nonvolatile memory (for example, flash memory; not shown). The data storage unit 7 allocates one of application data areas 8 to each downloaded application. In each of the application data areas 8, an application itself, and a management information and a user data that are attached to the application is stored.

Each of the application data areas 8 includes a management information area 9, an application area 10, and a user data area 11.

In the management information area 9, an identification information of a downloaded application, a storage address of the application, and the like is stored. The storage address used in this embodiment represents, for example, a uniform resource locator (URL) of a server storing the application. The storage address may be an IP address. In the application area 10, a downloaded application itself is stored. In the user data area 11, a user data for the application is stored. The user data used in this embodiment includes user setting information required when a user executes the application, history data obtained upon execution of the application, and intermediate results. For example, in the case of a game application, the user data represents default settings information obtained at the start of the game, a score of the game in midstream, a history of past scores, and the like.

The data storage unit 7 has its data managed dynamically by the application processing circuit 4. In this case, the data storage unit 7 can secure a free area for other data by having arbitrary data deleted by the application processing circuit 4.

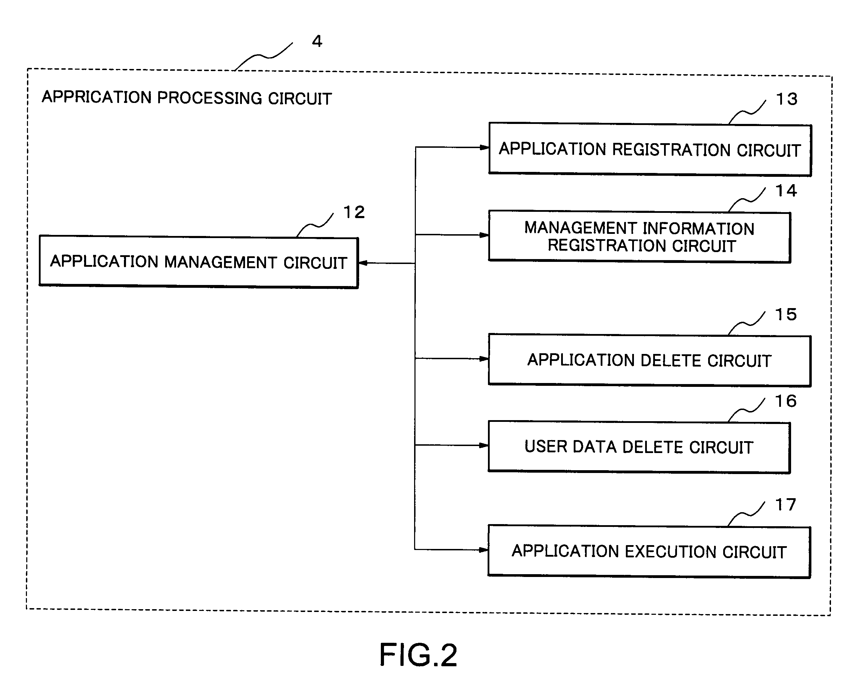

FIG. 2 shows a diagram showing the application processing circuit 4.

The application processing circuit 4 includes an application management circuit 12, an application registration circuit 13, a management information registration circuit 14, an application delete circuit 15, a user data delete circuit 16, and an application execution circuit 17.

The application management circuit 12: (1) manages registration and deletion of an application based on the contents of user operations inputted through the input unit 1, data inputted from the communication processing circuit 5, and the like; and (2) controls the output unit 2 to display data.

The application registration circuit 13 performs a registration processing for securing the application area 10 in the data storage unit 7 to register a new application in the secured application area 10.

The management information registration circuit 14 performs a registration processing for securing the management information area 9 in the data storage unit 7 to register management information on a new application in the secured management information area 9, and securing the user data area 11 in the data storage unit 7.

The application delete circuit 15 performs a deletion processing for the application area 10.

The user data delete circuit 16 performs a deletion processing for the management information area 9 and the user data area 11.

The application execution circuit 17 executes the registered application.

The output unit 2 is a display such as an LCD, which displays data or the like under control of the data processing circuit 6.

The input unit 1 includes a key pad and a control button (confirm button, arrow button, or the like), and operates under control of the data processing circuit 6. In other words, the data processing circuit 6 accepts information inputted by the user through the input unit 1. In addition, if the user uses the input unit 1 to select (or depress) a button (soft key) or an itemdisplayed on the output unit 2, the data processing circuit 6 identifies the selected button or item.

The communication circuit 3 transmits/receives a wireless signal to/from a base station (not shown) provided to a mobile communication network via an antenna (not shown). In other words, the communication circuit 3 performs communications with communication devices including a server and a cellular telephone that are arranged on a network such as a mobile communication network or the Internet.

Next, description will be made of an operation of the best mode for carrying out the invention with reference to the drawings.

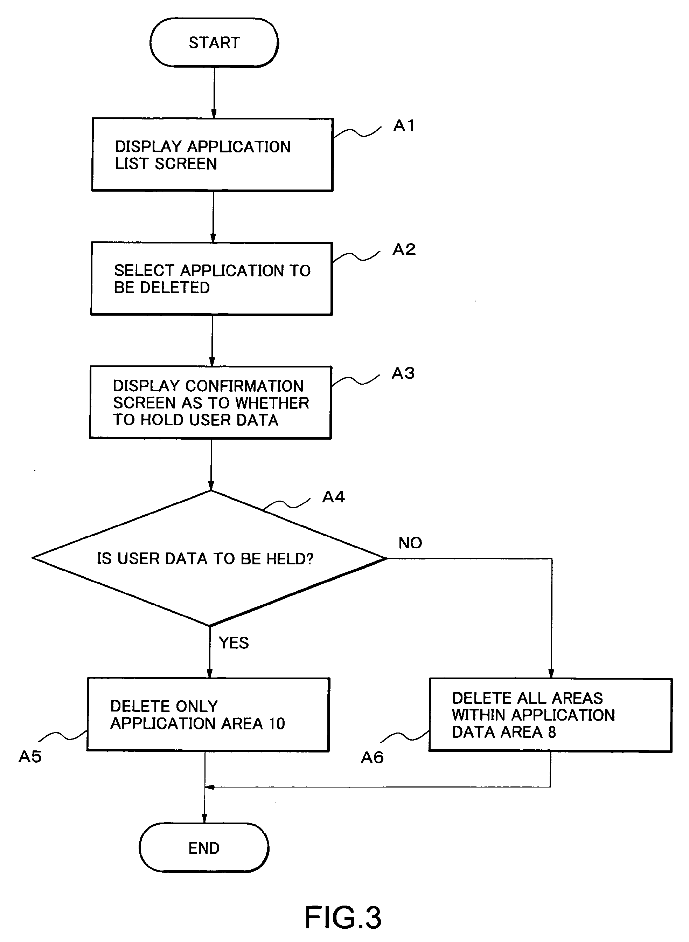

FIG. 3 is a flowchart showing how the application processing circuit 4 of the data processing circuit 6 operates upon deletion of an application.

When a request to delete an application is made through the input unit 1, the application management circuit 12 of FIG. 2 reads out a list of applications stored in the data storage unit 7, and displays the list on the output unit 2 (step A1).

When the user selects an application to be deleted from the list through the input unit 1 (step A2), the application management circuit 12 displays on the output unit 2 a confirmation screen that allows the user to select whether to hold or delete user data upon deletion of the application (step A3).

If "YES" is selected here through the input unit 1, the application management circuit 12 activates the application delete circuit 15. The application delete circuit 15 deletes only the application area 10 storing the application to be deleted (steps A4 andA5) , and the deletion processing for the application ends with the management information area 9 and the user data area 11 being held. As a result, the data storage unit 7 can secure a free area increased by the amount of deleted application area 10.

If "NO" is selected on the confirmation screen of step A3 through the input unit 1, the application management circuit 12 causes the application delete circuit 15 and the user data delete circuit 16 to perform the deletion processings for the application area 10 and the user data area 11, respectively. In other words, the application delete circuit 15 deletes the application area 10 storing the application to be deleted. The user data delete circuit 16 deletes the user data area 11 storing the application to be deleted. Further, the application management circuit 12 deletes the management information area 9 storing the application to be deleted. Accordingly, the entire application data area 8 subjected to the deletion (the management information area 9, application area 10, and user data area 11) is deleted (steps A4 and A6). As a result, the data storage unit 7 can secure a free area increased by the amount of the deleted application data area 8.

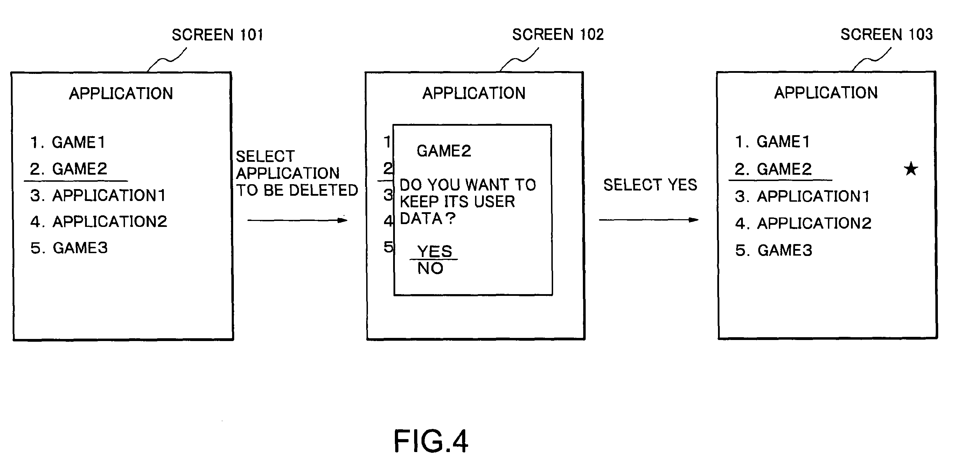

FIG. 4 is a diagram showing an example of how display is performed upon deletion of an application.

When the user requests for deletion of an application, the application management circuit 12 displays the list of applications on a screen of the output unit 2 (Screen 101 of FIG. 4). When the user selects an application to be deleted from the list through the input unit 1, the application management circuit 12 displays on the output unit 2 the confirmation screen that allows the user to select whether to hold or delete user data upon deletion of the application (Screen 102). If the user selects "YES" through the input unit 1, the application delete circuit 15 deletes only the application area 10 storing the application to be deleted, and displays an application list screen on the output unit 2 (Screen 103).

On Screen 103, the deleted application is given a mark (mark " 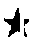 " in FIG. 4) by the application delete circuit 15, and remains indicated on the application list screen. The mark " 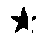 " of Screen 3 in this case indicates that only the application area 10 is deleted and the management information area 9 and the user data area 11 are held. Thus, if the user finds an application given the mark while viewing the application list screen, the user can learn that the application does not exist within the mobile terminal, but the user data of the application is held therein.

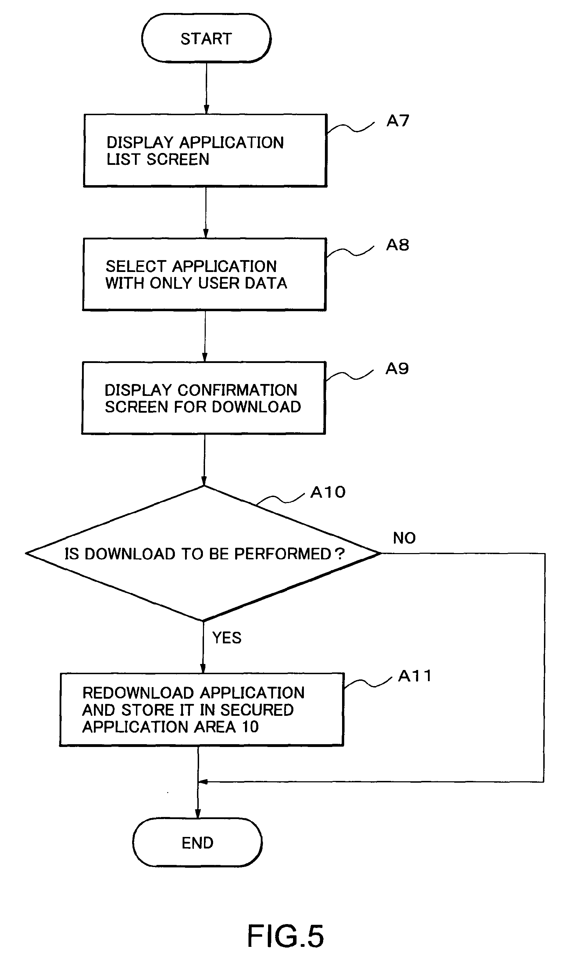

FIG. 5 is a flowchart showing how the application processing circuit 4 of the data processing circuit 6 operates upon redownload of an application for which only the application area 10 has been deleted.

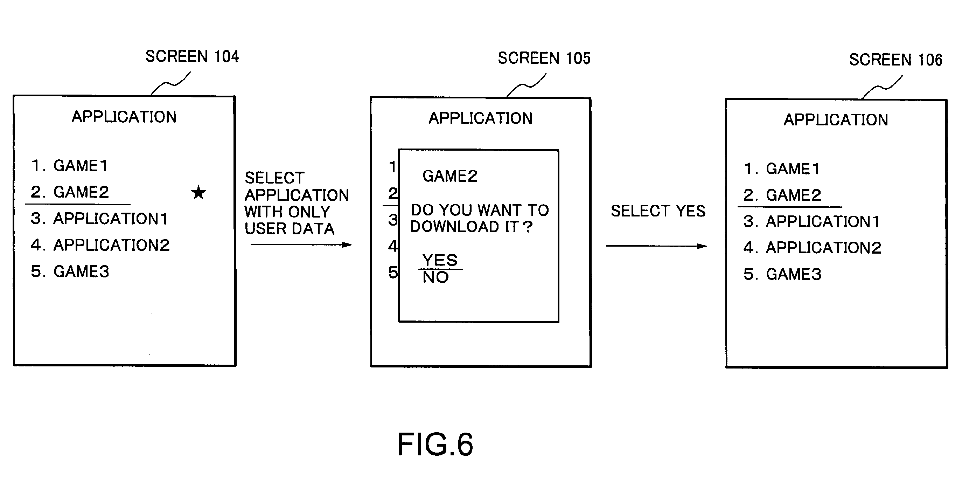

When a request to redownload an application is made through the input unit 1, the application management circuit 12 displays the application list screen on the output unit 2 (stepA7). When the user selects an application given the mark (mark " 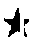 " in FIG. 6) on the screen (step A8), the application management circuit 12 displays the confirmation screen that allows the user to select whether to download the selected application (step A9). The application given the mark " 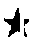 " referred to herein represents the application for which only the application area 10 has been deleted.

If the user selects "YES" through the input unit 1, the application management circuit 12 reads out the URL of an application storage address stored in the management information area 9 corresponding to the selected application. Further, based on the read URL, the application management circuit 12 performs communications with a server (not shown) at the application storage address via the communication circuit 3 to redownload the target application from the server at the application storage address. Then, the application management circuit 12 passes the control of the application redownloaded via the communication circuit 3 to the application registration circuit 13. Accordingly, the application registration circuit 13 secures the application area 10 corresponding to the application selected in step A8. Further, the application management circuit 12 stores the redownloaded application itself in the secured application area 10, thereby recovering the application into the original application data as was stored before deletion (stepA10). To be more specific, the application area 10 of the redownloaded application is combined with the management information area 9 and user data area 11 selected in step A8, and the application data area 8 obtained as a result of the combination is set as the application data area 8 for the recovered application.

As has been described in the above embodiment, when the data storage unit 7 has no free area, the application processing circuit 4 of the mobile terminal deletes only the application area 10 to secure a free area in the data storage unit 7 with the user data area 11 being held therein. In addition, the application processing circuit 4 redownloads the application for which the user data area 11 has already been secured. Therefore, according to the embodiment described above, it is possible to execute an application that uses the same user data as was used before deletion of the application.

Note that in the case of redownloading a new application for which the management information area 9 and the user data area 11 are not secured, the application management circuit 12 activates the application registration circuit 13 and the management information registration circuit 14. The application management circuit 12 causes the application registration circuit 13 and the management information registration circuit 14 to register the application in the data storage unit 7.

FIG. 6 is a diagram showing an example of how display is performed upon redownload of an application.

When the user requests for redownload of an application, the application management circuit 12 displays the list of applications on the screen of the output unit 2 (Screen 104 of FIG. 6). When the user selects an application given the mark (mark " 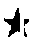 " in FIG. 6) on the screen, the application management circuit 12 displays on the output unit 2 the confirmation screen as to whether to perform download (screen 105). The application given the mark " 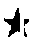 " referred to herein represents the application for which the application area 10 has been deleted.

If the user selects "DOWNLOAD" through the input unit 1, the application management circuit 12 performs download of the corresponding application, and displays the application list screen on the output unit 2 (screen 106). At this time, the application area 10 is secured, so that the mark (mark " 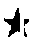 " in the example) displayed on Screen 4 to indicate the lack of the application area 10 is deleted.

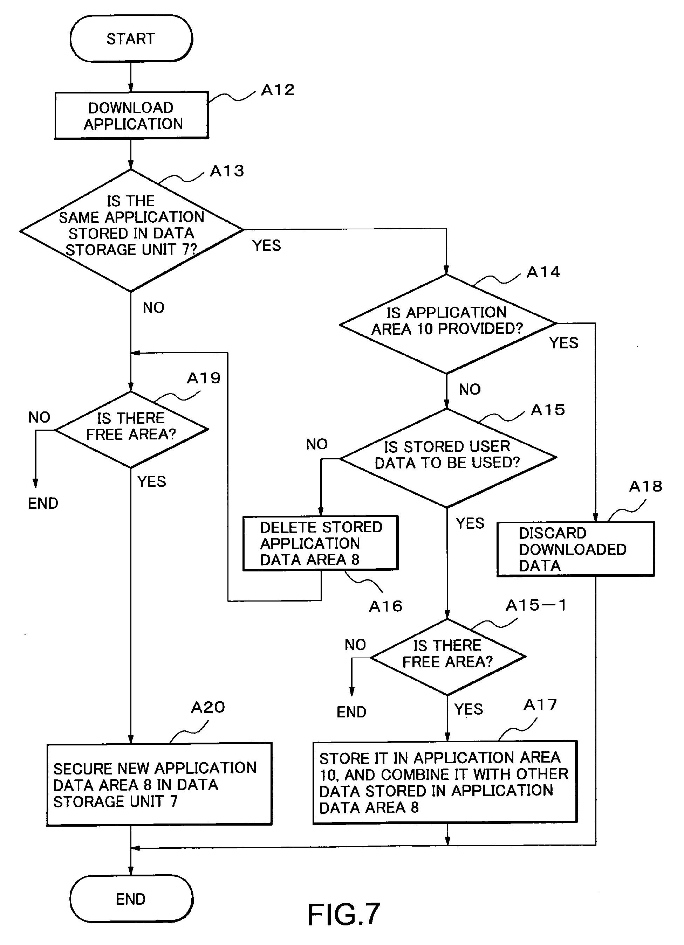

FIG. 7 is a flowchart showing how the application processing circuit 4 operates upon download of an application.

When a request to download an application is made through the input unit 1, the application management circuit 12 newly downloads an application from the server (not shown) at the application storage address by means of a browser function or the like (step A12 of FIG. 7). The applicationmanagement circuit 12 checks whether or not the same application has already been stored in the data storage unit 7 (step A13) from, for example, the URL of the application storage address stored in the management information area 9.

If it is judged in step A13 that the same application is not stored, the application management circuit 12 checks whether or not the data storage unit 7 has a free area (step A19). If there is a free area, the application management circuit 12 creates the application data corresponding to the newly downloaded application, and secures the application data area 8 in the data storage unit 7. In addition, the application management circuit 12 stores the created application data in the secured application data area 8 (step A20). Note that the user data area 11 secured within the application data area 8 stores no user data because the application is stored for the first time.

If there is no free area in step A19, the application management circuit 12 ends the processing for download.

If it is judged in step A13 that the same application is stored in the data storage unit 7, the application management circuit 12 checks whether or not the application area 10 exists with respect to the corresponding application (step A14). If there exists the application area 10, the application management circuit 12 discards the downloaded data that has been already downloaded (step A18).

If the application area 10 has been deleted (if there are only the management information area 9 and the user data area 11), the application management circuit 12 displays on the output unit 2 the confirmation screen that allows the user to select whether to use the stored user data (step A15).

If the user selects not to use the stored user data on the confirmation screen through the input unit 1, the application management circuit 12 deletes the stored application data area 8 (the management information area 9 and the user data area 11) via the user data delete circuit 16, and the procedure advances to step A19.

If it is judged in step A15 that the stored user data is to be used, the application management circuit 12 checks whether or not the data storage unit 7 has enough free area (step A15-1). If there is a free area, the application management circuit 12 secures the application area 10 via the application registration circuit 13, and stores the downloaded application itself in the application area 10. Further, the application management circuit 12 combines the stored application itself with the management information stored in the management information area 9 and the user data stored in the user data area 11 (step A17) , thereby recovering the application data that was used before. As a result, the mobile terminal can allow the user to user the user data stored in the user data area 11.

If it is judged in step A15-1 that there is no free area, the application management circuit 12 ends the processing for download.

As has been described in the above embodiment, according to this embodiment, the user is allowed to select as to whether or not to hold the user data upon deletion of the application, and if it is selected that the user data is to be held, the user data is held and only the application area is deleted. Thus, when the application that was previously deleted is redownloaded through a browser or the like, the same user data as was used before is available upon execution of the application. Alternatively, even when the user data is held, it is possible to use the redownloaded application as a new application because the user is allowed to select as to whether or not to user the stored user data when the application that was previously deleted is redownloaded through a browser or the like.

## Claims

1. An application data management method for a mobile terminal that performs management of an application, the mobile terminal comprising: an input unit for inputting data, an output unit for displaying data, and a communication circuit for obtaining an application via a network,
the application data management method comprising:
storing application data including: (a) management information including identification information of the application that is downloaded and an address from which the application is downloaded; (b) an application itself of the downloaded application; and (c) a user data corresponding to the application, said management information being stored in a management information area, said application itself being stored in an application area, and the user data being stored in a user data area;
when a request to delete an application is made through the input unit, displaying on the output unit a first list screen that allows selection of the application to be deleted from a list of applications stored in the data storage unit;
when the application to be deleted is selected on the displayed first list screen, displaying on the output unit a first confirmation screen that allows selection as to whether to hold the user data for the application; and
when it is selected to hold the user data on the displayed first confirmation screen, deleting only the application area storing the application to be deleted.

2. The application data management method for a mobile terminal according to claim 1, further comprising, when it is selected not to hold the user data on the displayed first confirmation screen, deleting all areas for the application data corresponding to the application to be deleted.

3. The application data management method for a mobile terminal according to claim 1 or 2, further comprising, when only the application area storing the application to be deleted is deleted, adding a mark to the application to be deleted which is displayed in the list of applications on the output unit.

4. The application data management method for a mobile terminal according to one of claims 1 to 3, further comprising:
when a request to redownload the application is made through the input unit, displaying a second list screen of applications on the output unit;
when the application added with the mark is selected on the displayed second list screen of applications, redownloading the target application from a storage address of the application via the communication circuit based on the address of the application stored in the corresponding management information area; and
recovering the application into the original application data by securing the application area corresponding to the target application in the data storage unit to store the redownloaded application itself in the secured application area.

5. The application data management method for a mobile terminal according to claim 4, further comprising, when the applicationisredownloaded,erasingthe markforthe application from the list of applications displayed on the output unit.

6. The application data management method for a mobile terminal according to one of claims 1 to 5, further comprising:
when a request to download the application is made through the input unit, downloading the application from a server via the communication circuit;
checking whether or not the same application as the downloaded application has already been stored in the data storage unit;
if it is judged that the same application is not stored, checking whether or not the data storage unit has an area that can store the application;
if it is judged that there exists the area that can store the application, creating an application data area corresponding to the application newly downloaded; and
storing the created application data in the data storage unit.

7. The application data management method for a mobile terminal according to claim 6, further comprising:
checking whether or not the data storage unit has the application area that stores the same application as was downloaded before; and
if it is judged that there exists the application area, discarding the downloaded application.

8. The application data management method for a mobile terminal according to claim 7, further comprising:
if it is judged that the application area has been deleted, displaying on the output unit a second confirmation screen to check whether or not to use the stored user data;
when it is selected not to use the stored user data on the second confirmation screen, deleting the user data area for the downloaded application;
checking whether or not there exists a storage area for the application;
if it is judged that there exists the storage area, creating the application data corresponding to the application newly downloaded; and
storing the created application data in the data storage unit.

9. A mobile terminal for performing management of an application, comprising:
an input unit for inputting data;
an output unit for displaying data;
a communication circuit for obtaining an application via a network;
storing means for storing application data; said application data comprising: (a) management information including identification information of the application that is downloaded and an address from which the application is downloaded; (b) an application itself of the downloaded application; and (c) a user data corresponding to the application, the management information being stored in a management information area, the application itself being stored in an application area, and the user data being stored in a user data area;
first displaying means for, when a request to delete an application is made through the input unit, displaying on the output unit a first list screen that allows selection of the application to be deleted from a list of applications stored in the data storage unit;
second displaying means for, when the application to be deleted is selected on the displayed first list screen, displaying on the output unit a first confirmation screen that allows selection as to whether to hold the user data for the application; and
first deleting means for, when it is selected to hold the user data on the displayed first confirmation screen, deleting only the application area storing the application to be deleted.

10. The mobile terminal according to claim 9, further comprising second deleting means for, when it is selected not to hold the user data on the displayed first confirmation screen, deleting all areas for the application data corresponding to the application to be deleted.

11. The mobile terminal according to claim 9 or 10, further comprising third displaying means for, when only the application area storing the application to be deleted is deleted, adding a mark to the application to be deleted which is displayed in the list of applications on the output unit.

12. The mobile terminal according to one of claims 9 to 11, further comprising:
fourth displaying means for, when a request to redownload the application is made through the input unit, displaying a second list screen of applications on the output unit;
redownloading means for, when the application added with the mark is selected on the displayed second list screen of applications, redownloading the target application from a storage address of the application via the communication circuit based on the address of the application stored in the corresponding management information area; and
recovering means for recovering the application into the original application data by securing the application area corresponding to the target application in the data storage unit to store the redownloaded application itself in the secured application area.

13. The mobile terminal according to claim 12, further comprising:
erasing means for, when the application is redownloaded, erasing the mark for the application from the list of applications displayed on the output unit.

14. The mobile terminal according to one of claims 9 to 13, further comprising:
downloading means for, when a request to download the application is made through the input unit, downloading the application from a server via the communication circuit;
first checking means for checking whether or not the same application as the down loaded application has already been stored in the data storage unit;
second checking means for, if it is judged that the same application is not stored, checking whether or not the data storage unit has an area that can store the application;
first creating means for, if it is judged that there exists the area that can store the application, creating an application data corresponding to the application newly downloaded; and
first storing means for storing the created application data in the data storage unit.

15. The mobile terminal according to claim 14, further comprising:
third checking means for checking whether or not the data storage unit has the application area that stores the same application as was downloaded before; and
discarding means for, if it is judged that there exists the application area, discarding the downloaded application.

16. The mobile terminal according to claim 15, further comprising:
fifth displaying means for, if it is judged that the application area has been deleted, displaying on the output unit a second confirmation screen to check whether or not to use the stored user data;
third deleting means for, when it is selected not to use the stored user data on the second confirmation screen, deleting the user data area for the downloaded application;
fourth checking means for checking whether or not there exists a storage area for the application;
second creating means for, if it is judged that there exists the storage area, creating the application data corresponding to the application newly downloaded; and
second storing means for storing the created application data in the data storage unit.
